# EUROPEAN PATENT SPECIFICATION

(11) **EP 2 711 514 B1**
(45) Date of publication and mention of the grant of the patent: **26.04.2017**
(21) Application number: 12785438.8
(22) Date of filing: 16.05.2012
(51) Int. Cl.: F01N 3/023, F01N 3/025, F01N 3/029, F01N 3/24, B01D 46/42

(54) **METHOD FOR MANUALLY REGENERATING PARTICULATE FILTER**
VERFAHREN ZUR MANUELLEN REGENERATION EINES PARTIKELFILTERS
PROCÉDÉ PERMETTANT DE RÉGÉNÉRER MANUELLEMENT UN FILTRE À PARTICULES

(30) Priority: 19.05.2011 JP 2011112208
(43) Date of publication of application: 26.03.2014
(73) Proprietor: Hino Motors Ltd., Tokyo 191-8660 (JP)
(72) Inventor: YABE, Masahiko, Hino-shi Tokyo 191-8660 (JP); YAMAZUMI, Hidemasa, Hino-shi Tokyo 191-8660 (JP); TAKUBO, Kensuke, Hino-shi Tokyo 191-8660 (JP)
(74) Representative: Louis Pöhlau Lohrentz
(86) International application number: PCT/JP2012/003185
(87) International publication number: WO 2012/157265

(56) References cited:
- EP-A1- 2 116 698
- EP-A2- 1 512 860
- WO-A2-2009/056931
- JP-A- 2002 021 534
- JP-A- 2008 180 190
- JP-A- 2009 108 775
- JP-A- 2009 287 507
- US-A1- 2008 196 395

## Description

### Technical Field

The present invention relates to a method for manually regenerating a particulate filter according to the preamble of claim 1.

### Background Art

WO2009056931A2 describes such a method for manually regenerating a particulate filter. Exhaust throttle means are closed to increase the engine load. If it is determined that a precondition for closing the exhaust throttle is not satisfied, auxiliaries such as an air-conditioner or a radio are turned off.

Particulates or particulate matter from a diesel engine is mainly constituted by carbonic soot and a soluble organic fraction (SOF) of high-boiling hydrocarbon and contains a trace of sulfate (misty sulfuric acid fraction). In order to reduce the particulates, it has been carried out to incorporate a particulate filter in an exhaust pipe through which an exhaust gas flows.

Such kind of particulate filter has a porous honeycomb structure made of ceramics such as cordierite and having lattice-like compartmentalized passages; alternate ones of the passages have plugged inlets and the remaining passages with unplugged open inlets are plugged at outlets thereof. Thus, only the exhaust gas passing through thin porous walls compartmentalizing the respective passages is discharged downstream while the particulates in the exhaust gas are captured on inner surfaces of the thin porous walls.

The particulates in the exhaust gas, which are captured and accumulated on inner surfaces of the thin porous walls, require to be burned off for regeneration of the particulate filter before exhaust resistance increases due to clogging. However, the exhaust gas from the diesel engine in a normal operation status rarely has a chance to reach a temperature level at which the particulates ignite by themselves, so that an oxidation catalyst with active species of, e.g., Pt or Pd is integrally carried by the particulate filter.

Specifically, employment of the particulate filter carrying such oxidation catalyst facilitates an oxidation reaction of the particulates captured to lower an ignition temperature, so that the particulates may be burned off even at an exhaust temperature level lower than ever before.

However, even in the employment of the particulate filter, a captured amount may exceed a treated amount of the particulates in an operation area having a lower exhaust temperature level. Continued operation at such lower exhaust temperature level may hinder sufficient regeneration of the particulate filter, resulting in excessive accumulation of the captured particulates in the particulate filter.

Thus, it has been conceived to additionally arrange a flow-through type oxidation catalyst on an entry side of the particulate filter; with the accumulation of the particulates becoming increased, fuel is added to the exhaust gas upstream of the particular filter to forcibly regenerate the particulate filter.

This causes an oxidation reaction of resultant concentrated hydrocarbon from the fuel addition during passing of the hydrocarbon through the oxidation catalyst. The exhaust gas elevated in temperature by heat of the reaction and flowing into the particulate filter just behind increases a bed temperature of the particulate filter to burn off the particulates, thereby regenerating the particulate filter.

Specific measure for the fuel addition may be such that main injection of fuel near a compression top dead center is followed by post injection at non-ignition timing after the top dead center to thereby conduct the fuel addition into the exhaust gas.

In general, the forced regeneration of the particulate filter is automatically conducted during running of a vehicle. It has been studied to conduct forcible regeneration of the particulate filter during stop of the vehicle by a driver who voluntarily pushes a regeneration switch by his or her own will (hereinafter referred to as "manual regeneration"). For the manual regeneration during the stop of the vehicle, exhaust temperature must be elevated to exceed at least a lower active limit temperature of the oxidation catalyst preceding the particulate filter.

Specifically, the oxidation catalyst preceding the particulate filter must be elevated in temperature to an active temperature range of the oxidation catalyst prior to the starting of the fuel addition; thus, at the starting of the manual regeneration an exhaust throttle valve (or an exhaust brake served for dual purposes) incorporated in the exhaust pipe is closed to thereby conduct exhaust throttling and thus increase an engine load, leading to increase of a fuel injection amount and thus elevation in temperature of the exhaust gas. The fuel addition by the post injection is waited until the oxidation catalyst rises in temperature up to the active temperature range.

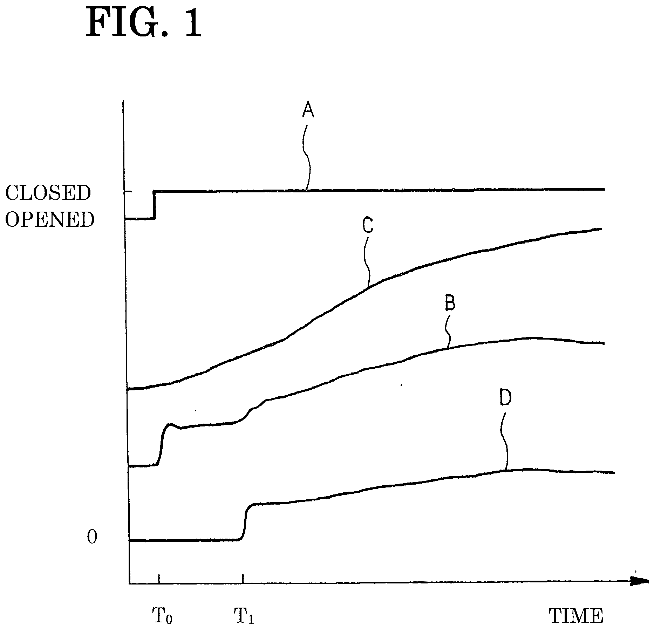

Fig. 1 shows time schedule of such manual regeneration. When the driver pushes the regeneration switch at time T₀ to start the manual regeneration, the exhaust throttle valve is closed as shown by A in Fig. 1 to conduct exhaust throttling. This increases resistance on the exhaust from the respective cylinders of the engine to increase the engine load (pumping loss), so that the fuel injection amount (including that by the post injection) shown by B in Fig. 1 is increased so as to retain the rotation speed of the engine; as a result, the exhaust temperature on the entry side of the particulate filter increases as shown by C in Fig. 1; then, the fuel addition by the post injection is started as shown by D in Fig. 1 at time T₁ where the exhaust temperature reaches a predetermined temperature for the starting of the fuel addition (the temperature by which the oxidation catalyst preceding the filter can be regarded to have reached a temperature within the active temperature range of the oxidation catalyst).

As a prior art literature pertinent to the manual regeneration of a particulate filter, there already exists, for example, the following Patent Literature 1 an applicant of which is the same as that of this invention.

### Citation List

### Patent Literature

[Patent Literature 1] JP 2003-155914A

### Summary of Invention

### Technical Problems

However, for example in a vehicle such as a refrigerator van with a refrigeration compressor mounted as auxiliary machine, manual regeneration of a particulate filter started at opening time in the morning with the vehicle being stopped may be concurrent with an operation of a refrigeration compressor which cools an inside of a freezer having been allowed to rise in temperature during night. Thus, the increase of the engine load by the operation of the refrigeration compressor may be overlapped with that by the exhaust throttling, leading to excess of the fuel injection amount in the engine.

Specifically, the excessive fuel injection amount in the engine increases oxygen consumption in the engine, leading to reduction of remaining oxygen in the exhaust gas. As a result, an air-fuel ratio of the fuel added by the post injection in the exhaust gas becomes lower than a theoretical air-fuel ratio, so that the oxidation reaction on the oxidation catalyst becomes inactive, disadvantageously leading to reduction of heat release value and slower increase in temperature of the particulate filter and thus elongated regeneration time.

The invention was made in view of the above and has its object to provide a method for manually regenerating a particulate filter wherein, even if an auxiliary machine is in operation upon starting of the manual regeneration, the particulate filter can be increased in temperature within a short period of time to shorten regeneration time.

### Solution to Problems

The invention is directed to a method for manually regenerating a particulate filter, said particulate filter being incorporated in an exhaust pipe and having an oxidation catalyst preceding the same, fuel addition means being arranged upstream of said oxidation catalyst for addition of fuel to exhaust gas, exhaust throttling means being arranged for throttling of an exhaust passage from an engine, manual regeneration of said particulate filter being started with a vehicle being stopped to throttle the exhaust passage by said exhaust throttling means and thus increase an engine load, fuel addition by said fuel addition means being started after an fuel injection amount is increased to increase temperature of the exhaust gas, captured particulates being burned off by heat from an oxidation reaction of the added fuel on said oxidation catalyst, thereby regenerating said particulate filter, which comprises determining whether the fuel injection amount exceeds a reference value after the starting of the manual regeneration of the particulate filter, and releasing the throttling of the exhaust passage by said exhaust throttling means provided exhaust temperature on an entry side of the particulate filter exceeds a reference temperature and only if said fuel injection amount exceeds the reference value.

According to the invention, if an auxiliary machine is concurrently in operation upon the starting of the manual regeneration by the driver, the fact that the fuel injection amount exceeds the reference value reveals addition of the load by the auxiliary machine, so that the throttling of the exhaust passage by the exhaust throttling means is released when the exhaust temperature on the entry side of the particulate filter exceeds the reference temperature. As a result, addition of the load by the operation of the auxiliary machine is prevented from being overlapped with that by the exhaust throttling, whereby the fuel injection amount in the engine is prevented from becoming excessive.

As a result, oxygen consumption in the engine is suppressed to relatively increase remaining oxygen in the exhaust gas, whereby the air-fuel ratio of the fuel added by the fuel addition means into the exhaust gas is improved to approach to a theoretical air-fuel ratio, the oxidation reaction on the oxidation catalyst being activated to increase heat release amount. Thus, increase of exhaust temperature on the entry side of the particulate filter is accelerated, leading to early heating of the particulate filter and substantial shortening of the regeneration time.

Moreover, the refrainment of the increase in engine load by the throttling of the exhaust passage with the exhaust throttling means substantially reduces a total fuel injection amount required for the manual regeneration, thereby substantially remedying unfavorable mileage due to implementation of the manual regeneration.

If the fuel injection amount does not exceed the reference value upon starting of the manual regeneration by the driver, this can be regarded as no addition of load by operation of the auxiliary machine, so that throttling of the exhaust passage with the exhaust throttling means may be continued to continuously increase the engine load.

In the invention, a fuel injection device for the engine may be employed as fuel addition means, the fuel addition being conducted such that main injection of fuel near a compression top dead center is followed by post injection at non-ignition timing after the compression top dead center.

### Advantageous Effects of Invention

The above-mentioned method for manually regenerating a particular filter of the invention will exhibit various excellent effects. For example, if the auxiliary machine is in operation upon starting of the manual regeneration, the operation of the auxiliary machine can be judged on the basis of the fuel injection amount to release the throttling of the exhaust passage with the exhaust throttling means and activate the oxidation reaction on the oxidation catalyst and thus increase heat release amount; as a result, the particulate filter can be increased in temperature within a short period of time to shorten the regeneration time; and moreover, a total fuel injection amount required for the manual regeneration can be substantially reduced to substantially remedy the unfavorable mirage due to the implementation of the manual regeneration.

### Brief Description of Drawings

Fig. 1 is a graph showing time schedule of conventional manual regeneration;
Fig. 2 is a schematic view showing an embodiment of the invention; and
Fig. 3 is a graph showing time schedule of manual regeneration according to the embodiment.

### Description of Embodiment

An embodiment of the invention will be described in conjunction with the drawings.

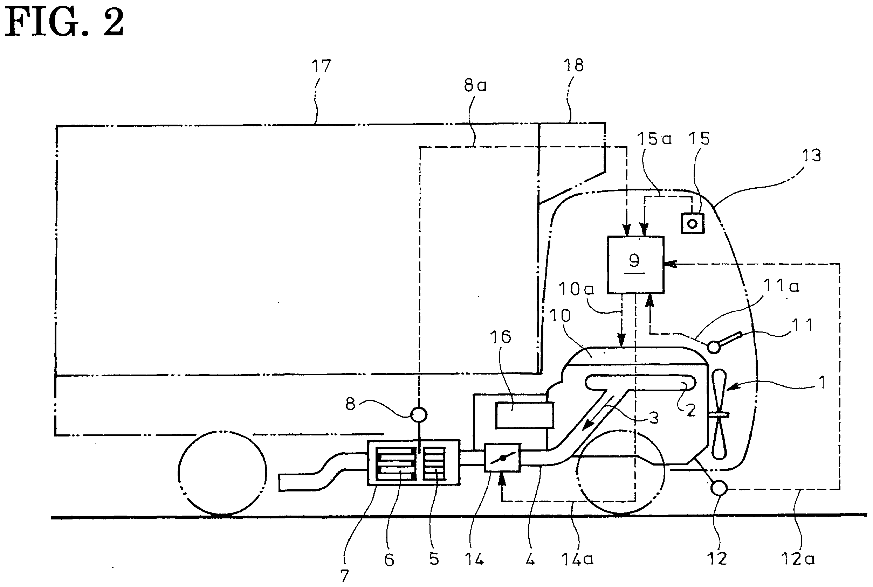

Fig. 2 shows the embodiment of the invention. Exemplarily illustrated is a refrigerator van as objective vehicle with a refrigeration compressor as auxiliary machine. A catalyst regenerative particulate filter 6 with an oxidation catalyst 5 preceding the same is encased by a filter case 7 and incorporated in an exhaust pipe 4 through which exhaust gas 3 discharged from a diesel engine 1 (engine) of the van via an exhaust manifold 2 flows.

The filter case 7 is provided with a temperature sensor 8 which detect a temperature of the exhaust gas 3 at between the oxidation catalyst 5 and the particulate filter 6, a temperature signal 8a from the sensor 8 being inputted to a controller 9 which constitutes an engine controlling computer (ECU: Electronic Control Unit).

The controller 9 is responsible also for control of fuel injection. Specifically, on the basis of an accelerator opening degree signal 11a from an accelerator sensor 11 (load sensor) which detects an accelerator opening degree as a load of the diesel engine 1 and a rotation speed signal 12a from a rotation sensor 12 which detects a rotation speed of the engine 1, a fuel injection signal 10a is outputted to a fuel injection device 10 which injects fuel to the respective cylinders of the engine 1.

The fuel injection device 10 comprises a plurality of injectors each for each cylinder. Electromagnetic valves for the respective injectors are appropriately controlled in opening degree by the fuel injection signal 10a such that the fuel injection timing (valve opening timing) and the fuel injection amount (valve opening period) are properly controlled.

In the controller 9, the fuel injection signal 10a for a normal operation mode is decided on the basis of the accelerator opening degree signal 11a and rotation speed signal 12a. When the particulate filter 6 is to be manually regenerated, changeover of the fuel injection control is waited until exhaust temperature on an entry side of the particulate filter 6 reaches a predetermined temperature for starting of the fuel addition (the temperature by which the preceding oxidation catalyst can be regarded to have reached a temperature within the active temperature range of the oxidation catalyst); and then, the fuel injection signal 10a is decided with an injection pattern such that the main injection conducted near the compression top dead center (crank angle 0°) is followed by post-injection conducted with non-ignition timing after the top dead center.

Specifically, in the embodiment, the fuel injection device 10 serves as fuel addition means for the manual regeneration of the particulate filter 6. As mentioned in the above, the main injection is followed by the post injection at the non-ignition timing after the compression top dead center; the post injection adds unburned fuel (mainly hydrocarbon: HC) into the exhaust gas 3. Such unburned fuel undergoes an oxidation reaction on the oxidation catalyst 5 preceding the particulate filter 6, a catalytic bed temperature being elevated by heat of the reaction to burn off the particulates in the particulate filter 6.

Further, mounted on an instrument panel in a cab 13 is a regeneration switch 15 for voluntarily conducting fuel addition with the fuel injection device 10 under condition that the vehicle is stopped and the diesel engine 1 is in idling state. When the driver operates the regeneration switch 15 to input the regeneration command signal 15a into the controller 9, changeover of the fuel injection control for starting of the post injection is waited on the basis of the temperature signal 8a from the temperature sensor 8 until the exhaust temperature on the entry side of the particulate filter 6 reaches the temperature for starting of the fuel addition.

Arranged in an appropriate position upstream of the particulate filter 6 is an exhaust brake 14 controllable in opening degree and adapted to throttle the flow passage of the exhaust pipe 4 into an appropriate opening degree. The exhaust brake 14 is controlled in opening degree by an opening degree command signal 14a from the controller 9. In the embodiment, when the driver operates the regeneration switch 15 to input the regeneration command signal 15a to the controller 9, an operation different and independent from the inherent operation is commanded to the exhaust brake 14, the exhaust brake 14 being utilized as exhaust throttling means for elevation of the exhaust temperature.

Specifically, when the driver operates the regeneration switch 15 to start the manual regeneration of the particulate filter 6 with the vehicle being stopped, the exhaust brake 14 is closed by the opening degree command signal 14a to conduct throttling of the exhaust passage, whereby the resistance to the exhaust from the respective cylinder of the diesel engine 1 is enhanced to increase the engine load (pumping loss), leading to increase of the fuel injection amount so as to retain the rotation speed of the diesel engine 1 and thus increase in temperature of the exhaust gas 3.

In this regard, in the controller 9, the fuel injection amount is monitored to determine whether the fuel injection amount exceeds a reference value after the starting of the manual regeneration; only in a case where the fuel injection amount exceeds the reference value, the exhaust brake 14 is opened provided the exhaust temperature on the entry side of the particulate filter 6 exceeds a reference temperature, thereby releasing the throttling of the exhaust passage with the exhaust brake 14.

Specifically, in the refrigerator van as shown in Fig. 2, a refrigeration compressor 16 driven by the diesel engine 1 is provided as auxiliary machine and servers to compress and circulate a refrigerant to a condenser-built-in evaporator 18 which cools a luggage room on a loading platform 17 as freezer. If the increase of the load by the operation of the refrigeration compressor 16 is overlapped with that with the exhaust throttling, the fuel injection amount may exceed the reference value.

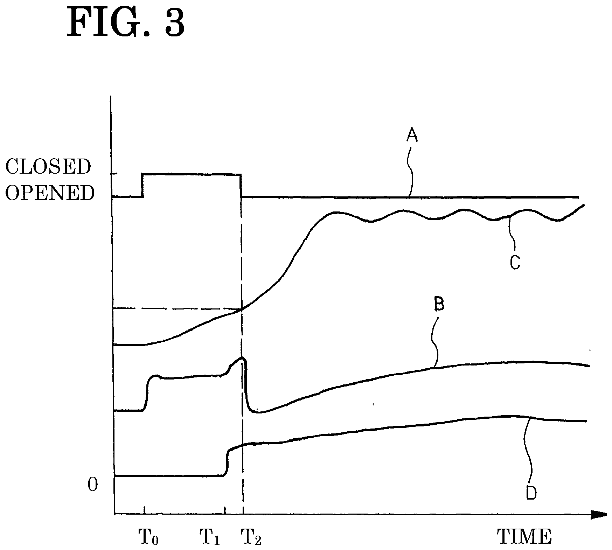

Thus, as shown in the time schedule of Fig. 3 with reference to the manual regeneration method of the embodiment, when the driver pushes the regeneration switch 15 at time T₀ to start the manual regeneration, the exhaust brake 14 is closed to conduct exhaust throttling as shown by A in Fig. 3 which is accompanied by enhancement of the resistance to the exhaust from the respective cylinders of the diesel engine 1 and thus increase of the engine load (pumping loss). As a result, the fuel injection amount as shown by B in Fig. 3 is increased so as to retain the rotation speed of the engine, so that the exhaust temperature on the entry side of the particulate filter 6 increases as shown by C in Fig. 3.

Then, at time T₁ where the exhaust temperature on the entry side of the particulate filter 6 reaches the predetermined temperature for starting of the fuel addition (the temperature by which the temperature of the preceding oxidation catalyst 5 can be regarded to have reached the active temperature range), the fuel addition by the post injection is started as shown by D in Fig. 3. In this case, if the refrigeration compressor 16 is concurrently in operation, the fact that the fuel injection amount exceeds the reference value reveals the addition of the load by the refrigeration compressor 16, so that at time T₂ where the exhaust temperature exceeds the reference temperature on the entry side of the particulate filter 6, the exhaust brake 14 is opened as shown by A in Fig. 3 to release throttling of the exhaust passage; as a result, the fuel injection amount as shown by B in Fig. 3 is decreased as the engine load (pumping loss) is decreased. Thus, the increase of the load by the operation of the refrigeration compressor 16 is prevented from being overlapped with that by the exhaust throttling, whereby the fuel injection amount in the diesel engine 1 is prevented from becoming excessive.

As a result, the oxygen consumption in the diesel engine 1 is suppressed to relatively increase a remaining oxygen in the exhaust gas 3; thus, the air-fuel ratio in the fuel added into the exhaust gas 3 by the post injection with the fuel injection device 10 is improved to approach to the theoretic air-fuel ratio, so that the oxidation reaction on the oxidation catalyst 5 is activated to increase heat release amount. Thus, as shown by C in Fig. 3, increase of the exhaust temperature on the entry side of the particulate filter 6 is accelerated, resulting in early heating of the particulate filter 6 and substantial shortening of the regeneration time.

The graph of Fig. 3 reveals that the exhaust temperature on the entry side of the particular filter 6 shown by C in the graph and having a maximum temperature feedback-controlled to a predetermined target temperature is in a desirable form such that the exhaust temperature is abruptly increased after starting of the fuel addition by the post injection, enters as it is into a region where the maximum temperature is feedback-controlled and makes a hunting behavior at the target temperature.

Moreover, as is clear from the transition of the fuel injection amount shown by B in the graph of Fig. 3, the refrainment of the increase in engine load by the throttling of the exhaust passage with the exhaust brake 14 substantially reduces the total fuel injection amount required for the manual regeneration, thereby substantially remedying unfavorable mileage due to implementation of the manual regeneration.

If the fuel injection amount does not exceed the reference value upon starting of the manual regeneration by the driver, no addition of load by operation of the refrigeration compressor 8 is judged by the controller 9, and the throttling of the exhaust passage by the exhaust brake 14 is continued to continue the increasing of the engine load.

Thus, according to the above embodiment, if the refrigeration compressor 16 is in operation upon starting of the manual regeneration, the operation of the refrigeration compressor 16 can be judged on the basis of the fuel injection amount to release the throttling of the exhaust passage by the exhaust brake 14, activate the oxidation reaction on the oxidation catalyst 5 and increase the heat release amount, so that the particulate filter 6 can be enhanced in temperature within a short time to shorten the regeneration time and the total fuel injection amount required for the manual regeneration can be substantially reduced, thereby substantially remedying the unfavorable mirage due to the implementation of the manual regeneration.

It is to be understood that a method for manually regenerating a particular filter according to the invention is not limited to the above embodiment and that various changes and modifications may be made without departing from the scope of the invention. For example, the objective vehicle and the auxiliary machine are not limited to a refrigerator van and a refrigeration compressor, respectively. For the fuel addition, a fuel adding valve may be incorporated in the exhaust manifold or in the exhaust pipe so as to directly inject the fuel to the exhaust gas for the fuel addition. An exhaust throttle valve may be arranged separately and independently from the exhaust brake.

### Reference Signs List

- 1: diesel engine (engine)
- 3: exhaust gas
- 4: exhaust pipe
- 5: oxidation catalyst
- 6: particulate filter
- 8: temperature sensor
- 8a: temperature signal
- 9: controller
- 10: fuel injection device (fuel addition means)
- 14: exhaust brake (exhaust throttle valve)
- 15: regeneration switch
- 16: refrigeration compressor (auxiliary machine)

## Claims

1. A method for manually regenerating a particulate filter (6), said particulate filter being incorporated in an exhaust pipe (4) and having an oxidation catalyst (5) preceding the same, fuel addition means (10) being arranged upstream of said oxidation catalyst for addition of fuel to exhaust gas (3), exhaust throttling means (14) being arranged for throttling of an exhaust passage from an engine (1), manual regeneration of said particulate filter being started with a vehicle being stopped to throttle the exhaust passage by said exhaust throttling means and thus increase an engine load, fuel addition by said fuel addition means being started after an fuel injection amount is increased to increase temperature of the exhaust gas, captured particulates being burned off by heat from an oxidation reaction of the added fuel on said oxidation catalyst, thereby regenerating said particulate filter, which comprises determining whether the fuel injection amount exceeds a reference value after the starting of the manual regeneration of the particulate filter, and releasing the throttling of the exhaust passage by said exhaust throttling means provided exhaust temperature on an entry side of the particulate filter exceeds a reference temperature and only if said fuel injection amount exceeds the reference value,
**characterised in that** if an auxiliary machine (16) is concurrently in operation upon the starting of the manual regeneration by the driver, the fact that the fuel injection amount exceeds the reference value reveals addition of the load by the auxiliary machine (16), so that the throttling of the exhaust passage by the exhaust throttling means (14) is released when the exhaust temperature on the entry side of the particulate filter (6) exceeds the reference temperature.

2. The method for manually regenerating the particulate filter as claimed in claim 1,
**characterised in that**
a fuel injection device for the engine is employed as fuel addition means (10), the fuel addition being carried out such that main injection of fuel near a compression top dead center is followed by post injection at non-ignition timing after the compression top dead center.

## Patentansprüche

1. Verfahren zum manuellen Regenerieren eines Partikelfilters (6), wobei der Partikelfilter in ein Abgasrohr (4) eingebaut ist und einen ihm vorgeschalteten Oxidationskatalysator besitzt, wobei stromaufseitig des Oxidationskatalysators Kraftstoffhinzufügungsmittel (10) angeordnet sind, um dem Abgas (3) Kraftstoff hinzuzufügen, wobei Abgasdrosselungsmittel (14) dafür ausgelegt sind, einen Abgaskanal von einer Kraftmaschine (1) zu drosseln, wobei eine manuelle Regeneration des Partikelfilters begonnen wird, wenn ein Fahrzeug gestoppt worden ist, um den Abgaskanal durch die Abgasdrosselungsmittel zu drosseln und um somit eine Kraftmaschinenlast zu erhöhen, wobei eine Kraftstoffhinzufügung durch die Kraftstoffhinzufügungsmittel begonnen wird, nachdem eine Kraftstoffeinspritzmenge erhöht worden ist, um die Temperatur des Abgases zu erhöhen, wobei eingefangene Partikel durch Wärme von einer Oxidationsreaktion des hinzugefügten Kraftstoffs an dem Oxidationskatalysator verbrannt werden, wodurch der Partikelfilter regeneriert wird, das umfasst: Bestimmen, ob die Kraftstoffeinspritzmenge einen Referenzwert überschreitet, nachdem mit der manuellen Regeneration des Partikelfilters begonnen worden ist, und Lösen der Drosselung des Abgaskanals durch die Abgasdrosselungsmittel, sofern die Abgastemperatur an einer Eintrittsseite des Partikelfilters eine Referenztemperatur überschreitet und nur dann, wenn die Kraftstoffeinspritzmenge den Referenzwert überschreitet,
**dadurch gekennzeichnet, dass**
dann, falls eine Hilfsmaschine (16) gleichzeitig in Betrieb ist, wenn durch den Fahrer die manuelle Regeneration gestartet wird, die Tatsache, dass die Kraftstoffeinspritzmenge den Referenzwert überschreitet, Hinzufügung der Last durch die Hilfsmaschine (16) erkennen lässt, so dass die Drosselung des Abgaskanals durch die Abgasdrosselungsmittel (14) gelöst wird, wenn die Abgastemperatur auf der Eintrittsseite des Partikelfilters (6) die Referenztemperatur überschreitet.

2. Verfahren zum manuellen Regenerieren des Partikelfilters nach Anspruch 1, **dadurch gekennzeichnet, dass**
eine Kraftstoffeinspritzvorrichtung für die Kraftmaschine als Kraftstoffhinzufügungsmittel (10) verwendet wird, wobei die Kraftstoffhinzufügung in der Weise ausgeführt wird, dass einer Haupteinspritzung von Kraftstoff nahe eines oberen Totpunkts der Verdichtung eine Nacheinspritzung zu einem Zeitpunkt ohne Zündung nach dem oberen Totpunkt der Verdichtung folgt.

## Revendications

1. Procédé de régénération manuelle d'un filtre à particules (6), ledit filtre à particules étant intégré à un tuyau d'échappement (4) et ayant un catalyseur d'oxydation (5) précédant celui-ci, un moyen d'ajout de carburant (10) étant placé en amont dudit catalyseur d'oxydation afin d'ajouter du carburant au gaz d'échappement (3), un moyen d'étranglement d'échappement (14) étant prévu pour étrangler un passage d'échappement d'un moteur (1),
la régénération manuelle dudit filtre à particules étant lancée avec un véhicule qui est arrêté afin d'étrangler le passage d'échappement à l'aide dudit moyen d'étranglement d'échappement et, ainsi, d'augmenter la charge du moteur, l'ajout de carburant par ledit moyen d'ajout de carburant étant lancée après qu'une quantité d'injection de carburant a augmenté de façon à augmenter la température du gaz d'échappement, les particules capturées étant brûlées par la chaleur issue d'une réaction d'oxydation du carburant ajouté dans ledit catalyseur d'oxydation, afin de régénérer ledit filtre à particules, qui comprend la détermination du fait que la quantité d'injection de carburant dépasse une valeur de référence après le lancement de la régénération manuelle du filtre à particules, et le fait de relâcher l'étranglement du passage d'échappement à l'aide dudit moyen d'étranglement d'échappement, à condition que la température d'échappement côté admission du filtre à particules dépasse une température de référence, et uniquement si ladite quantité d'injection de carburant dépasse la valeur de référence,
**caractérisé en ce que**
si une machine auxiliaire (16) est simultanément en marche lors du lancement de la régénération manuelle par le conducteur, le fait que la quantité d'injection de carburant dépasse la valeur de référence révèle l'ajout de la charge par la machine auxiliaire (16),
de sorte que l'étranglement du passage d'échappement par le moyen d'étranglement d'échappement (14) soit relâché lorsque la température d'échappement côté admission du filtre à particules (6) dépasse la température de référence.

2. Procédé de régénération manuelle de filtre à particules selon la revendication 1, **caractérisé en ce que**
un dispositif d'injection de carburant destiné au moteur est utilisé comme moyen d'ajout de carburant (10), l'ajout de carburant étant effectué de sorte que l'injection principale de carburant à proximité d'un point mort haut de compression soit suivie par une post-injection à un moment de non-allumage après le point mort haut de compression.
